# EUROPÄISCHE PATENTANMELDUNG

(11) **EP 4 477 882 A2**
(43) Veröffentlichungstag der Anmeldung: **18.12.2024**
(21) Anmeldenummer: 24178351.3
(22) Anmeldetag: 28.05.2024
(51) Int. Cl.: F04B 17/03, F04B 49/06, F04B 49/20

(54) **HYDRAULIK-PUMPENANORDNUNG**

(30) Priorität: 13.06.2023 DE 102023115388
(71) Anmelder: Liebherr-Werk Bischofshofen GmbH, 5500 Bischofshofen (AT)
(72) Erfinder: ALTENBERGER, Florian, 5662 Gries (AT); EDER, Marco, 5700 Zell am See (AT); HOFBAUER, Johannes, 5301 Eugendorf (AT); STOCK, Josef, 5500 Bischofshofen (AT); WINDHOFER, Reinhard, 5505 Mühlbach am Hochkönig (AT)
(74) Vertreter: Herrmann, Uwe

(57) **Zusammenfassung**

Die vorliegende Erfindung betrifft eine Hydraulik-Pumpenanordnung, umfassend: eine Verstellpumpe, vorzugsweise einer Load-Sensing-Verstellpumpe, zum Ausgeben eines Volumenstroms eines Hydraulikfluids, einen Elektromotor zum Antreiben der Verstellpumpe, insbesondere Schrägscheiben- oder Schwenkwinkelpumpe, über eine in ihrer Drehzahl variierbaren Antriebswelle, und eine Steuereinheit, die mit der Verstellpumpe und dem Elektromotor verbunden ist und dazu ausgelegt ist, einen vorgegebenen Volumenstrom durch das Ansteuern der Verstellpumpe und des Elektromotors vorzusehen. Die Hydraulik-Pumpenanordnung ist dadurch gekennzeichnet, dass die Pumpenanordnung ferner einen mit der Steuereinheit verbundenen Temperatursensor aufweist, der eine Wicklungstemperatur des Elektromotors erfasst, wobei solange die Wicklungstemperatur unterhalb eines Schwellenwerts liegt, die Steuereinheit dazu ausgelegt ist, den vorgegebenen Volumenstrom mittels einer maximalen Fördermenge der Verstellpumpe und der sich hieraus ergebenden Drehzahl des Elektromotors bereitzustellen, und falls die Wicklungstemperatur den Schwellenwert erreicht oder übersteigt, die Steuereinheit dazu ausgelegt ist, den vorgegebenen Volumenstrom mittels einer gegenüber der maximalen Fördermenge verringerten Fördermenge der Verstellpumpe und der sich hieraus ergebenden erhöhten Drehzahl des Elektromotors bereitzustellen.

## Beschreibung

Die vorliegende Erfindung betrifft eine Hydraulik-Pumpenanordnung, bzw. eine mobile Arbeitsmaschine mit einer solchen Hydraulik-Pumpenanordnung.

In herkömmlichen Baumaschinen und Arbeitsgeräten kommen Hydraulikantriebe für Fahrfunktionen, Lenkfunktionen und verschiedene Arbeitsabläufe zum Einsatz. Sie werden typischerweise von einem Dieselmotor über ein Verteilergetriebe, das eine oder mehrere Hydraulikpumpen betreibt, angetrieben. Diese verschiedenen Antriebe sind miteinander verknüpft, was sich durch die Antriebsdrehzahl des Dieselmotors negativ auswirken kann.

Mit der Elektrifizierung dieser Maschinen durch den Einsatz von Einzelelektromotoren werden die einzelnen Antriebe in Bezug auf ihre Drehzahlvorgaben unabhängig. Dies ermöglicht es, die durch elektromotorisch angetriebene Pumpenantriebe normalerweise direkt angetriebenen elektrischen Fahrantriebe zu entkoppeln. Auf diese Weise kann das Fördervolumen der Hydraulikanlage rein durch die Drehzahlvorgabe des Elektromotors eingestellt werden. Anstelle einer Hydraulikpumpe mit variablem Fördervolumen, einer so genannten Verstellpumpe, kann eine einfachere und kostengünstigere Konstantpumpe verwendet werden.

Es gibt jedoch Situationen, in denen eine von einem Elektromotor angetriebene Verstellpumpe für die Arbeits- und Lenkhydraulik von Vorteil sein kann. Dies gilt insbesondere im Hinblick auf einen energieeffizienten Betrieb der Maschine in allen Betriebssituationen.

Eine Verstellpumpe ist eine Hydraulikpumpe, die trotz konstanter Umdrehungszahl der Antriebswelle ein variables Fördervolumen aufweisen kann. Der Hauptvorteil dieser Pumpe ist, dass sie ihre Leistung an die jeweiligen Bedürfnisse des Systems anpassen kann, in dem sie eingesetzt wird.

Das Fördervolumen einer Pumpe ist die Menge an Flüssigkeit, die sie in einer bestimmten Zeit (zum Beispiel pro Minute) fördert. Bei einer Verstellpumpe kann das Fördervolumen angepasst werden, das heißt, es kann erhöht oder verringert werden. Das geschieht in der Regel durch Veränderung des Neigungswinkels der Pumpenflügel oder der Exzentrizität im Pumpengehäuse, was wiederum den verfügbaren Raum für das Hydraulikmedium und somit das Fördervolumen beeinflusst. Das Fördervolumen Vg der Verstellpumpe hängt dabei von einer Auslenkung des Schwenkwinkels der Verstellpumpe ab. Ist der Schwenkwinkel gering, so ist auch das Fördervolumen gering. Ist der Schwenkwinkel groß, so ist auch die durch die Verstellpumpe geförderte Fördermenge groß. Es besteht demnach ein direkter proportionaler Zusammenhang zwischen von der Verstellpumpe gelieferter Fördermenge und der Auslenkung des Schwenkwinkels

Diese Fähigkeit zur Anpassung des Fördervolumens ermöglicht es einer Verstellpumpe, sehr effizient zu arbeiten. Sie kann genau die Menge an Hydraulikflüssigkeit liefern, die gerade benötigt wird, und fördert kein überschüssiges Fluid. Das ist insbesondere in Systemen von Vorteil, in denen die Anforderungen an die Hydraulikleistung variieren, wie zum Beispiel in Baumaschinen, wo die Arbeitsgeschwindigkeit und -last häufig wechseln.

In einem solchen Fall kann die Verstellpumpe beispielsweise bei einer ersten Arbeitsaufgabe ein kleineres Fördervolumen und bei einer zweiten Arbeitsaufgabe ein größeres Fördervolumen liefern. Dies führt zu einem effizienteren Betrieb der Maschine und kann helfen, Kraftstoff zu sparen und die Lebensdauer der Pumpe zu verlängern.

Insbesondere bei elektrisch angetriebenen Fahrzeugen bzw. Bau- und Arbeitsmaschinen, welche als Primärenergiequelle über eine Batterie verfügen, gilt es Verlustleistungen und parasitären Energieverbrauch zu minimieren, um damit die Reichweite und Nutzungsdauer des Fahrzeuges erhöhen oder ggf. sogar die Batteriegröße verringern zu können.

Die vorliegende Erfindung hat sich zur Aufgabe gemacht, die oben aufgeführten Nachteile zu überwinden und eine Hydraulik-Pumpenanordnung zu schaffen, welche diesbezüglich von Vorteil ist.

Dies gelingt mit einer Hydraulik-Pumpenanordnung, die sämtliche Merkmale eines der unabhängigen Ansprüche aufweist. Vorteilhafte Ausgestaltungen sind dabei in den abhängigen Ansprüchen vorgesehen.

Die erfindungsgemäße Hydraulik-Pumpenanordnung umfasst eine Verstellpumpe, vorzugsweise einer Load-Sensing-Verstellpumpe, zum Ausgeben eines Volumenstroms eines Hydraulikfluids, einen Elektromotor zum Antreiben der Verstellpumpe, insbesondere Schrägscheiben- oder Schwenkwinkelpumpe, über eine in ihrer Drehzahl variierbaren Antriebswelle, und eine Steuereinheit, die mit der Verstellpumpe und dem Elektromotor verbunden ist und dazu ausgelegt ist, einen vorgegebenen Volumenstrom durch das Ansteuern der Verstellpumpe und des Elektromotors vorzusehen. Die Hydraulik-Pumpenanordnung ist dadurch gekennzeichnet, dass die Pumpenanordnung ferner einen mit der Steuereinheit verbundenen Temperatursensor aufweist, der eine Wicklungstemperatur des Elektromotors erfasst, wobei solange die Wicklungstemperatur unterhalb eines Schwellenwerts liegt, die Steuereinheit dazu ausgelegt ist, den vorgegebenen Volumenstrom mittels einer maximalen Fördermenge der Verstellpumpe und der sich hieraus ergebenden Drehzahl des Elektromotors bereitzustellen, und falls die Wicklungstemperatur den Schwellenwert erreicht oder übersteigt, die Steuereinheit dazu ausgelegt ist, den vorgegebenen Volumenstrom mittels einer gegenüber der maximalen Fördermenge verringerten Fördermenge der Verstellpumpe und der sich hieraus ergebenden erhöhten Drehzahl des Elektromotors bereitzustellen.

Bei den offenen Hydraulikkreisläufen von mobilen Arbeitsmaschinen besteht die Möglichkeit, sich die Vorteile eines Load-Sensing Antriebes mit Verstellpumpe zu Nutze zu machen. Beim Radlader äußerst sich dieser Vorteil beispielsweise bei der Materialaufnahme dadurch, dass sobald die Bewegung der Hydraulikzylinder durch Erreichen der Maximaldrücke ins Stocken gerät und nicht mehr den Wunschvorgaben des Fahrers folgen kann, die Fördermenge durch das Zurückschwenken der Verstellpumpe ohne aufwendige elektronische Überwachungs- und Steuerungsmaßnahmen reduziert werden kann.

Abseits der Materialaufnahme hingegen sollte die Verstellpumpe wann immer möglich bei großem Schwenkwinkel und damit gutem Wirkungsgrad betrieben werden, wofür sich eine elektronische Steuerung bestehend aus elektronischem Joystick, elektro-hydraulisch vorgesteuertem Ventil und drehzahlregelbarere elektromotorisch angetriebener Verstellpumpe anbietet.

Die Erfindung nutzt diese Erkenntnis und betreibt die Verstellpumpe zunächst bei hohem Wirkungsgrad mit einem maximalen Schwenkwinkel, sodass die Verstellpumpe eine maximale Fördermenge liefert. Unter Berücksichtigung des vorgegebenen Volumenstroms ergibt sich dadurch eine Drehzahl, welche der Elektromotor zum Antreiben der Verstellpumpe liefern muss. Das hierbei durch den Elektromotor zu liefernde Drehmoment kann je nach der durch die Pumpenanordnung ausgeführten Tätigkeit (hoher Lastdruck pLS) sehr hoch sein, sodass es hierbei typischerweise zu einem Anstieg der Wicklungstemperatur T des Elektromotors kommt.

Eine zu hohe Wicklungstemperatur gilt es zu vermeiden, da es ansonsten zu einer Überhitzung des Elektromotors kommen kann. Nach der Erfindung wird aus Effizienzgründen dennoch zunächst einmal die Verstellpumpe mit maximalen Schwenkwinkel für eine maximale Fördermenge betrieben und erst nach einem Erreichen eines Temperatur-Schwellenwerts der Motorwicklungen des Elektromotors der Schwenkwinkel reduziert und gleichzeitig die Drehzahl des Elektromotors erhöht. Der Volumenstrom Q bleibt durch das Anheben der Drehzahl n dabei gleich, da der Schwenkwinkel der Verstellpumpe, welcher die Fördermenge Vg reguliert, reduziert wird. Dabei gilt der Zusammenhang: Q=Vg x n.

Die Steuereinheit so ausgelegt sein, dass sowohl der Schwenkwinkel wie auch die Drehzahl des Elektromotors schrittweise angepasst werden, bis sich eine Stabilisierung der Wicklungstemperatur einstellt. Nach der Erfindung kann dabei auch vorgesehen sein, dass bei einem Unterschreiten eines zweiten Wicklungstemperatur-Schwellenwerts, der unterhalb des vorgenannten ersten Wicklungstemperatur-Schwellenwerts liegt, das Drehmoment des Elektromotors verringert und der Schwenkwinkel der Verstellpumpe erhöht wird. Ziel ist es dabei erneut, immer dann, wenn die Wicklungstemperatur es zulässt, möglichst mit einer maximalen Fördermenge (auch Kubatur genannt) der Verstellpumpe zu arbeiten, um möglichst wenig Verluste zu generieren. Der hydraulisch-mechanische Wirkungsgrad η bei Schrägachsen- und Schrägscheibentriebwerken, wie sie typischerweise bei Verstellpumpen genutzt werden, ist hierbei am günstigsten.

Nach einer optionalen Modifikation der vorliegenden Erfindung kann vorgesehen sein, dass zum Bereitstellen eines vorgegebenen, konstanten Volumenstroms für ein Anbaugerät im Dauerbetrieb, die Steuereinheit dazu ausgelegt ist, die Fördermenge der Verstellpumpe und die Drehzahl des Elektromotors in Abhängigkeit der gemessenen Wicklungstemperatur zu bestimmen, vorzugsweise derart, dass
a) ausgehend von einer maximalen Fördermenge der Verstellpumpe diese so lange abgesenkt wird, bis die Wicklungstemperatur sich stabilisiert und den Schwellenwert nicht mehr übersteigt, oder
b) ausgehend von einer minimalen Fördermenge der Verstellpumpe diese so lange angehoben wird, bis die Wicklungstemperatur den Schwellenwert übersteigt.

Für den Betrieb von hydraulischen Anbaugeräten, bei einem mit der Hydraulik-Pumpenanordnung versehenen Radlader sind das bspw. Kehrbesen, Schneefräsen, Salzstreugeräte oder Siebschaufeln, wird der vorgegebene Volumenstrom Q über einen längeren Zeitraum am Stück abverlangt und nicht über einen manuell bedienten Joystick vorgegeben.

Besonders vorteilhaft ist das vorgeschlagene erfindungsgemäße Verfahren bei luftgekühlten Elektromotoren, da hierbei das Anheben der Drehzahl des Motors zum einen die Stromverluste reduziert, andererseits aber auch die Konvektionskühlung verbessert. Die Verbesserung der Kühlung geschieht typischerweise deswegen, da der luftgekühlte Motor über ein auf der Motorwelle sitzendes Lüfterrad verfügt, das bei einem Erhöhen der Drehzahl einen größeren Kühlluftstrom erzeugt.

Nach einer vorteilhaften Ausgestaltung der vorliegenden Erfindung kann vorgesehen sein, dass die Zusammenhänge von Wicklungstemperatur, Drehzahlnachführung des Elektromotors und einem Einstellen der Fördermenge der Verstellpumpe, vorzugsweise ein Bestromen eines Proportionalmagnetventils, als Kennlinien in der Steuereinheit abgelegt sind.

Das Einstellen der Fördermenge der Verstellpumpe kann dabei mithilfe eines Proportionalmagnetventils erfolgen, bei dem eine Verringerung der Stromzufuhr auch eine Verringerung des Schwenkwinkels bedeutet.

Die vorliegende Erfindung betrifft ferner eine Hydraulik-Pumpenanordnung, vorzugsweise eine solche nach einem der vorhergehenden diskutierten Ansätze, und umfasst eine Pumpe, insbesondere Verstellpumpe oder Konstantpumpe, zum Ausgeben eines Volumenstroms eines Hydraulikfluids, einen Elektromotor zum Antreiben der Pumpe über eine in ihrer Drehzahl variierbaren Antriebswelle, und eine Steuereinheit, die mit der Pumpe und dem Elektromotor verbunden ist und dazu ausgelegt ist, einen vorgegebenen Volumenstrom durch das Ansteuern des Elektromotors vorzusehen. Die Hydraulik-Pumpenanordnung ist dadurch gekennzeichnet, dass die Steuereinheit dazu ausgelegt ist, eine von einem Bediener mittels manueller Eingabe erzeugte Fördermengenvorgabe anhand der Fördermenge der Pumpe, insbesondere Fördermenge einer Konstantpumpe oder maximale Fördermenge einer Verstellpumpe, in eine Drehzahlvorgabe für den Elektromotor umzurechnen, vorzugsweise hieraus einen Vorgabewert zum Bestromen eines elektro-hydraulisch vorgesteuerten Proportionalventils auszugeben. Dieses Ventil wird genutzt, um die Fördermenge der Verstellpumpe zu variieren.

Ferner kann nach der Erfindung vorgesehen sein, dass die Vorgabe für eine Drehzahl und/oder eine Fördermenge der Verstellpumpe durch eine Auslenkung eines Joysticks oder einer Lenkung von einem Bediener vorgegeben ist und die Zusammenhänge des manuellen Betätigungswunsches, einer Drehzahlvorgabe und/oder der Fördermenge der Verstellpumpe, vorzugsweise einem Bestromen eines Proportionalmagnetventils, formelmäßig und/oder als Kennlinien in der Steuereinheit abgelegt sind.

Das Ablegen von Kennlinie in der Steuereinheit ermöglicht eine besonders schnelle Reaktion auf die Eingabe eines Bedieners in Bezug auf das Ändern eines gewünschten Volumenstroms. Ein Berechnen ist zunächst nicht erforderlich, da in Abhängigkeit der Bedienereingabe nur der Arbeitspunkt entlang einer Kennlinie verändert wird.

Beim normalen Arbeitsbetrieb gibt der Fahrer über die Auslenkung eines Joysticks eine Volumenstromanforderung vor, entweder mit einem elektronischen Joystick oder durch Druckmessung im Vorsteuerkreis bei einem hydraulischen Joystick.

In der Steuereinheit wird die Fördermengenanforderung Q unter Berücksichtigung des max. Fördervolumens Vg,max in eine Drehzahlanforderung n für den Antriebsmotor der Verstellpumpe ermittelt und bspw. durch den Frequenzumrichter entsprechend umgesetzt.

Gleichzeitig kann vorgesehen sein, dass die Steuereinheit der Fördermengenanforderung Q eine Ventilauslenkung zuordnet, welche durch Vorgabe einer Magnetventilbestromung I durch umgesetzt wird, falls es sich um ein elektrohydraulisch vorgesteuertes Proportionalventil zum Verändern der Fördermenge der Verstellpumpe handelt.

Bei einem hydraulisch vorgesteuerten Proportionalventil kann vorgesehen sein, dass der Vorsteuerdruck durch einen hydraulischen Joystick erzeugt wird.

Die Zusammenhänge zwischen manuellem Betätigungswunsch durch einen Joystick, der Drehzahlvorgabe n für den Elektromotor und der Ventilöffnungscharakteristik (Ventilstrom I) zum Beeinflussen der Veränderung des Schwenkwinkels der Verstellpumpe können dabei als Formel und/oder als Kennlinien in der Steuereinheit hinterlegt sein.

Für den Fall, dass die Verstellpumpe über Sensorik zur Ermittlung der aktuellen Fördermenge verfügt (bspw. mittels Schwenkwinkelsensor) kann diese in der Steuereinheit genutzt werden, die Verstellpumpe stets noch weiter an den Betrieb bei max. Fördermenge Vg,max heranzuführen.

Alternativ kann die aktuelle Fördermenge (auch: Kubatur), [Vg] = cm³, indirekt durch die Steuereinheit ermittelt werden, bspw. anhand:
- des aktuellen Antriebsmomentes als Information eines Frequenzumrichters, [M] = Nm,
- des gemessenen Pumpendruckes, [p] = bar,
- alternativ des gemessenen Lastdruck-Signals pLS der Arbeitshydraulik zuzüglich Regeldifferenzdruck: p = pLS + Δp, [p] = bar,
- eines typischen hydraulisch-mechanischen Wirkungsgrades, [η],
- der Fördermenge Vg = (100 * M * η) / (1,59 * p).

Nach einer vorteilhaften Modifikation der vorliegenden Erfindung kann vorgesehen sein, dass die Steuereinheit ferner dazu ausgelegt ist, in einen Energiesparmodus einzutreten, der aktiv wird, wenn für eine vorbestimmte Zeit eine Hydraulikanforderung ausbleibt, und die Steuereinheit dazu ausgelegt ist, das Auslenken eines Joysticks für Arbeitsfunktionen und/oder das Auslenken einer Lenkung während des Energiesparmodus zu überwachen, um bei einem Fördermengenbedarf den Elektromotor wieder auf Drehzahl zu bringen.

Es kann dabei aus Effizienzgründen von Vorteil sein, wenn nach einem Ausbleiben einer Hydraulikanforderung für eine bestimmte Zeit in einen Energiesparmodus eingetreten wird, in dem der Elektromotor des Pumpenantriebs abgeschaltet ist. Dies geschieht vorteilhafter Weise immer dann, wenn innerhalb einer vorbestimmten Zeit keine Volumenstromanforderung eingegangen ist.

Vorteilhafterweise kann dabei vorgesehen sein, dass die Hydraulik-Pumpenanordnung mit einer Überwachung einer manuellen Lenkungsbetätigung, die durch einen Joystick und/oder ein Lenkrad umgesetzt ist, und eine Veränderung über einen Winkel- oder Lagesensor erfasst, um einen Fördermengenbedarf zu erkennen und den Energiesparmodus zu verlassen.

Dadurch wird sichergestellt, dass bei einer manuellen Lenkeingabe des Bedieners der Energiesparmodus verlassen wird und der Elektromotor wieder anläuft.

Vorzugsweise kann vorgesehen sein, dass eine Fahrtrichtungsvorwahl, ein Fahrpedal und/oder das Lösen einer Parkbremse durch die Steuereinheit überwacht wird, um einen Fördermengenbedarf zu erkennen und den Energiesparmodus zu verlassen.

Nach einer weiteren vorteilhaften Modifikation der vorliegenden Erfindung kann vorgesehen sein, dass die Steuereinheit ferner dazu ausgelegt ist, eine elektrisch betätigbare Parkbremse automatisch zu aktivieren, wobei die Parkbremse vorzugsweise als Negativbremse bzw. Federspeicherbremse ausgeführt ist, um beim Eintreten in den Energiesparmodus und dem Ausbleiben einer Bremsdruckversorgung für eine hydraulisch betätigbare Betriebsbremsanlage das Fahrzeug durch die Parkbremse zu fixieren.

Dadurch wird sichergestellt, dass das Abschalten des Elektromotors in dem Energiesparmodus nicht dazu führt, dass das damit einhergehende Deaktivieren einer Parkbremse, die einen gewissen Hydraulikdruck benötigt, zu einer ungesicherten mobilen Arbeitsmaschine führt. Schließlich kann eine Negativbremse bzw. eine Federspeicherbremse vorgesehen sein, die beim Eintreten in den Energiesparmodus das Fahrzeug bremst. Es wird demnach bei einem Ausbleiben der Druckversorgung für die Betriebsbremsanlage eine elektrisch betätigte Bremse durch die Steuereinheit hinzugeschaltet, wobei es sich hierbei um eine Negativbremse handeln kann, welche federbetätigt bei gezieltem Wegschalten oder Ausbleiben von Betätigungsdruck schließt.

Weiter kann vorgesehen sein, dass verschiedene Bedienelemente während des Energiesparmodus durch die Steuereinheit überwacht werden, um bei einem betätigen oder einem Auslenken der Bedienelemente den Energiesparmodus zu verlassen und in den Arbeitsmodus zu wechseln. Hierbei kann Elektromotor über eine Drehzahlvorgabe entweder auf eine Minimaldrehzahl oder eine gewünschte Arbeitsdrehzahl gebracht werden.

So kann vorteilhafter Weise beim Lösen der Parkbremse, bei einer Fahrtrichtungswahl oder einer Pedalbetätigung einer mit der Hydraulik-Pumpenanordnung versehenen mobilen Arbeitsmaschine die Steuereinheit dazu ausgelegt sein, den Elektromotor zunächst auf eine Mindestdrehzahl zu bringen, um weitere Eingaben des Bedieners der mobilen Arbeitsmaschine abzuwarten. Sollte hingegen während des Energiesparmodus eine durch den Bediener vorgegebene Aktuation eines Joysticks oder dergleichen erfolgen, die unmittelbar eine gewünschte Zieldrehzahl des Elektromotors angibt, wird der Energiesparmodus so verlassen, dass der Elektromotor unmittelbar die gewünschte Drehzahl einnimmt, um den vorgegebenen Volumenstrom zu liefern.

In einer weiteren Ausgestaltung der Pumpenanordnung ist vorgesehen, dass die Steuereinheit ausgelegt ist, einen Energiesparmodus zu unterdrücken, wenn eine oder mehrere Voraussetzungen erfüllt sind.

Dabei kann es sich beispielsweise um bestimmte ungünstige Temperaturbedingungen (z. B. Kühlkreislaufmedien, Umgebung, Komponententemperaturen) handeln, die für das Abschalten des Antriebes vorherrschen.

Auch ist es denkbar, dass das Wechseln in den Energiesparmodus durch Fahrerwunsch bzw. manuelle Eingabe unterbunden wird. Bei der Voraussetzung kann es sich somit auch um eine manuelle Eingabe durch den Bediener der Arbeitsmaschine handeln.

Unter gewissen Voraussetzungen wird der Energiesparmodus somit unterdrückt. Beispiele dafür sind Kaltstartbedingungen, welche sich anhand von Medientemperaturen (Hydrauliköl, Kühlflüssigkeiten) und Umgebungstemperatur festmachen lassen, aber auch erhöhte Medientemperaturen oder Motorwicklungstemperaturen, denen man u. U. mit erhöhter Drehzahl und Zwangsbelüftung durch ein Lüfterrad auf der Motorwelle entgegenwirken kann.

Daraus ergibt sich ein Temperaturarbeitsbereich, in dem der Energiesparmodus aktiviert werden kann. Ggf. kann es von Vorteil sein, wenn man den Energiesparmodus für gewisse zyklische Tätigkeiten manuell unterdrückt werden kann, wenn das ständige Aus- und Einschalten als störend empfunden wird, vergleichbar mit einer Start-Stopp-Automatik beim PKW.

Weiterhin kann also vorgesehen sein, dass die Hydraulik-Pumpenanordnung ferner einen Drucksensor zum Überwachen eines Lastdrucks-Signals der Lenkung umfasst, um den Fördermengenbedarf einer Lenkanlage beim Betrieb des Motors bei Mindestdrehzahl zu erkennen, um hierauf durch die Steuereinheit die Motordrehzahl anzuheben.

Nach der Erfindung kann ferner vorgesehen sein, dass die Hydraulik-Pumpenanordnung ferner mit einer direkten oder indirekten Überwachung eines Schwenkwinkels der Verstellpumpe und einer Drehzahlnachführung des Elektromotors versehen ist, die darauf abzielt, die Verstellpumpe stets mit einer möglichst großen Fördermenge zu betreiben, im Optimalfall mit ihrer maximalen Fördermenge.

Dabei kann vorteilhafter Weise vorgesehen sein, dass die Erfassung des Schwenkwinkels durch die Steuereinheit direkt mittels eines Winkelsensors oder indirekt ermittelt wird, wobei das indirekte Ermitteln des Schwenkwinkels durch die Steuereinheit erfolgt, indem anhand des Pumpenantriebsmoments, vorzugsweise als Information eines Frequenzumrichters, und des über einen Sensor erfassten Pumpendrucks der Schwenkwinkel unter Berücksichtigung typischer Wirkungsgrade rechnerisch ermittelt wird.

Die Erfindung betrifft ferner eine Hydraulik-Pumpenanordnung, vorzugsweise eine solche nach einem der vorstehend diskutierten Aspekte, und umfasst eine Load-Sensing-Verstellpumpe zum Ausgeben eines Volumenstroms eines Hydraulikfluids, einen Elektromotor zum Antreiben der Verstellpumpe, insbesondere Schrägscheiben- oder Schwenkwinkelpumpe, über eine in ihrer Drehzahl variierbaren Antriebswelle, eine Steuereinheit, die mit der Verstellpumpe und dem Elektromotor verbunden ist und dazu ausgelegt ist, einen vorgegebenen Volumenstrom durch das Ansteuern der Verstellpumpe und des Elektromotors vorzusehen, und einer hydraulisch betätigbaren Bremsanlage, deren Versorgungsdruck über dem Regeldifferenzdruck bzw. Stand-by-Druck der Verstellpumpe liegt. Die Hydraulik-Pumpenanordnung ist dadurch gekennzeichnet, dass der Verstellpumpe durch eine Ventilanordnung eine Lastdruckanforderungen simuliert wird, obwohl tatsächlich gar keine Lastdruckanforderungen existiert, sodass bei einer tatsächlichen Lastdruckanforderungen die simulierte Lastdruckanforderungen additiv hinzukommt.

Hierdurch gelingt die Bereitstellung eines Bremsdrucks, also der Versorgungsdruck der Bremsanlage, obwohl der Regeldifferenzdruck hierzu eigentlich zu gering ist.

Grundsätzlich erfordert es die Förderstromregelung, dass die Verstellpumpe im Arbeitsbetrieb einen in der Größenordnung von zumindest 10 bis 20 bar höheren Druck als der aktuelle Lastdruck liefert. Zum Zweck der Effizienz möchte man diesen Einstellwert so gering wie möglich wählen.

Für den Fall, dass es sich um eine gemeinsame Ölversorgung für mehrere Hydraulikkreise handelt, welche auch eine Bremsanlage versorgen muss, kann es erforderlich sein, dass die Pumpe trotz der geringen Differenzdruckeinstellungen im nicht betätigten Zustand einer Arbeitshydraulik und/oder Lenkung einen höheren Druck in der Größenordnung 30 bis 40 bar liefern muss. Dabei wird durch eine Ventilverschaltung im nicht betätigten Zustand von Arbeitshydraulik und/oder Lenkung ein künstliches Lastdruck-Signal pLS in der Größenordnung von 10 bis 20 bar erzeugt, sodass die Pumpe trotz geringer Differenzdruckeinstellung den erforderlichen Betätigungsdruck für die Betriebsbremsanlage von 30 bis 40 bar bereitstellen kann. Der für die Bremse erforderliche Betätigungsdruck setzt sich dabei aus der Differenzdruckeinstellung der Verstellpumpe und dem künstlich erzeugten Lastdruck-Signal additiv zusammen.

Durch diese Maßnahme können die Verluste im manuellen Betrieb reduziert werden, indem man die Differenzdruckeinstellung am Pumpenregler auf ein Minimum reduziert.

Die Erfindung betrifft ferner eine Hydraulik-Pumpenanordnung, vorzugsweise nach einem der vorhergehenden diskutierten Aspekte und umfasst eine Load-Sensing-Verstellpumpe zum Ausgeben eines Volumenstroms eines Hydraulikfluids, einen Elektromotor zum Antreiben der Verstellpumpe, insbesondere Schrägscheiben- oder Schwenkwinkelpumpe, über eine in ihrer Drehzahl variierbaren Antriebswelle, eine Steuereinheit, die mit der Verstellpumpe und dem Elektromotor verbunden ist und dazu ausgelegt ist, einen vorgegebenen Volumenstrom durch das Ansteuern der Verstellpumpe und des Elektromotors vorzusehen, und einer hydraulisch betätigbaren Bremsanlage, deren Versorgungsdruck über dem Regeldifferenzdruck bzw. Stand-by-Druck der Verstellpumpe liegt. Die Hydraulik-Pumpanordnung ist dadurch gekennzeichnet, dass die Pumpenanordnung ferner ein Speicherladeventil aufweist, das einen Hydraulikspeicher für die Bremsanlage lädt, vorzugsweise wobei ein Drucksensor für das Speicherladeventil vorgesehen ist, um bei Bedarf den Elektromotor mit dem Ziel anzusteuern, die Drehzahl der Pumpe zu erhöhen.

Bei größeren Fahrzeugen benötigt die Bremsanlage einen höheren Druck als 30 bis 40 bar, nämlich einen Betätigungsdruck im Bereich von 80 bis 100 bar für die Betriebsbremse.

Dafür eignet sich bspw. eine Speicherlösung, wobei der Hydraulikspeicher über ein Speicherladeventil geladen werden kann. Das Speicherladeventil arbeitet als mechanischer Zweipunktregler und meldet bei Erreichen des Einschaltdruckes den Bedarf über eine Lastdruck-Signalleitung (LS-Signale) als zusätzlicher Verbraucher zu Arbeitshydraulik und Lenkung an den Pumpenregler, was die Verstellpumpe zum Ausschwenken veranlassen kann.

Im Zusammenhang mit dem zuvor erwähnten Energiesparmodus kann ein Drucksensor in der Lastdruck-Signalleitung den jeweils höheren Druck erfassen, entweder jenen der Lenkanlage oder jenen des Speicherladeventils.

Insofern ist es möglich, nach dem Zurückkehren aus dem Energiesparmodus durch das Erfassen des Lastdruckes mit einem gemeinsamen Drucksensor für Lenkung und Bremsanlage auch auf den Bedarf der Speicherladefunktion reagieren zu können, und die Drehzahl des Elektromotors entsprechend anheben zu können, sodass das Laden des Speichers bis zum Abschaltdruck in kurzer Zeit abgeschlossen werden kann.

Die Erfindung betrifft ferner eine Pumpenanordnung nach einem der vorhergehenden Aspekte, wobei der Drucksensor zur Erfassung des Lastdrucks-Signals von einer Lenkanlage und/oder einem Speicherladevorgang dient und das jeweils lasthöhere Signal von der Steuereinheit verarbeitet wird.

Ferner kann nach einer optionalen Modifikation der vorliegenden Erfindung vorgesehen sein, dass die Steuereinheit dazu ausgelegt ist, die Förderstromregelung der Verstellpumpe anhand eines hydraulischen Lastsignals des lasthöchsten Verbrauchers zu ermitteln, wobei diese Ermittlung mittels mechanischem Regler erfolgen kann jedoch auch über eine elektrisch-proportionale Verstellung des Fördervolumens mittels elektronischer Steuerung erfolgen kann.

Vorzugsweise kann vorgesehen sein, dass der Elektromotor über eine durch den Motor selbst angetriebene Zwangsbelüftung mittels mindestens einem Lüfterrad verfügt, sodass dessen Belüftung mit zunehmender Drehzahl zunimmt.

Dabei kann das Lüfterrad starr auf der Antriebswelle für die Verstellpumpe angeordnet sein oder mit dieser in einer Zahnradverbindung stehen.

Nach einer weiteren Modifikation der vorliegenden Erfindung kann vorgesehen sein, dass eine Hydraulik-Pumpenanordnung nach einer der vorstehend vorgestellten Aspekte ferner eine zweite Pumpe aufweist, die neben der Verstellpumpe ebenfalls von dem Elektromotor angetrieben wird. Diese zweite Pumpe kann bspw. zur Versorgung von einem Kühlkreislauf dienen und über dieselbe Ausgangswelle des Elektromotors angetrieben werden wie die Verstellpumpe. Dabei ist die Verwendung einer Verstellpumpe bei der zweiten Pumpe ebenfalls von Vorteil, da der Fördermengenbedarf nicht zwangsläufig mit einer Drehzahlerhöhung einhergehen muss, sodass auch die Fördermenge der zweiten durch den Elektromotor angetriebenen Pumpe nicht zwangsläufig erhöht wird (wenn die erste Verstellpumpe eine solche anfordert), was gegebenenfalls zu Verlusten führen würde und man grundsätzlich vermeiden möchte

Die Verwendung der Verstellpumpe als zweite Pumpe ist ein mögliches, nicht beschränkendes Ausführungsbeispiel. Von der Erfindung ebenso umfasst ist der Einsatz einer Konstantpumpe als zweite Pumpe, wie diese in den Figuren dargestellt ist.

Die Erfindung betrifft ferner einen Hydraulikantrieb mit einer Pumpenanordnung nach einem der vorhergehenden diskutierten Aspekte zum Einsatz in einer Bau- und/oder Arbeitsmaschine, bspw. Radlader, Radbagger, Raupenbagger, Laderaupe, Schubraupe und/oder knickgelenkter Muldenkipper oder Bau- und/oder Arbeitsmaschine, bspw. Radlader, Radbagger, Raupenbagger, Laderaupe, Schubraupe und/oder knickgelenkter Muldenkipper mit einer Pumpenanordnung nach einem der vorhergehenden diskutierten Aspekte.

Weitere Merkmale, Einzelheiten und Vorteile der Erfindung werden anhand der nachfolgenden Figurenbeschreibung ersichtlich. Dabei zeigen:
- Fig. 1:: ein schematisches Diagramm zur Erläuterung des Zusammenhangs von Wicklungstemperatur, Drehzahl und Schwenkwinkel,
- Fig. 2 a):: ein schematisches Diagramm zur Erläuterung des Zusammenhangs von Drehzahl und Antriebsmoment der Pumpe,

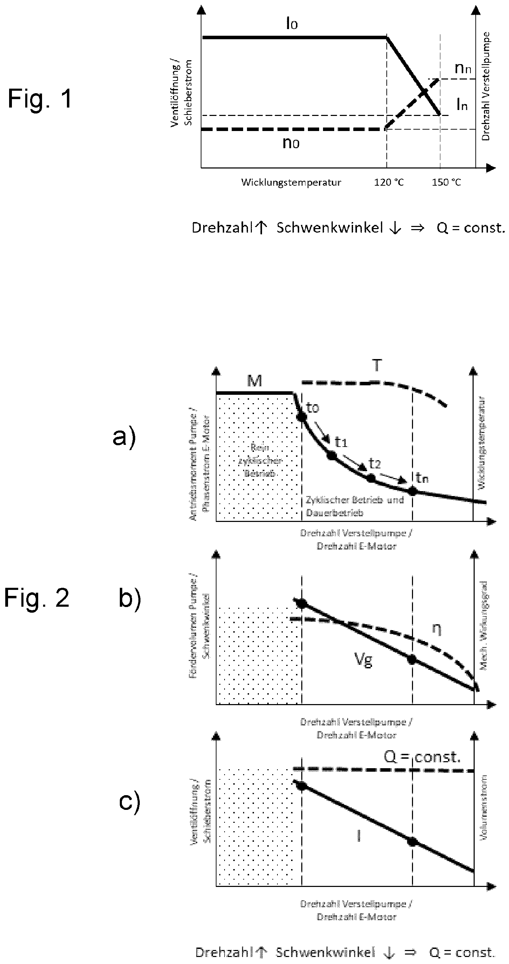

- Fig. 2 b):: ein schematisches Diagramm zur Erläuterung des Zusammenhangs von Drehzahl und Schwenkwinkel der Pumpe,
- Fig. 2 c):: ein schematisches Diagramm zur Erläuterung des Zusammenhangs von Drehzahl und Aktuatorstrom zum Einstellen des Schwenkwinkels der Pumpe,

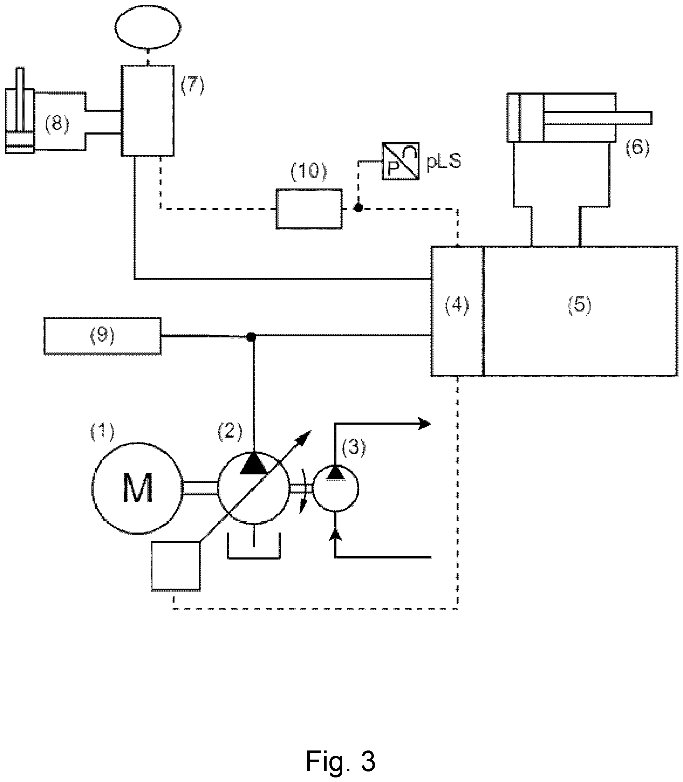

- Fig. 3:: ein Prinzipschaubild für künstliches Lastdrucksignal im unbetätigten Zustand einer Arbeitshydraulik und einer Lenkung für die Versorgung einer Betriebsbremse, und

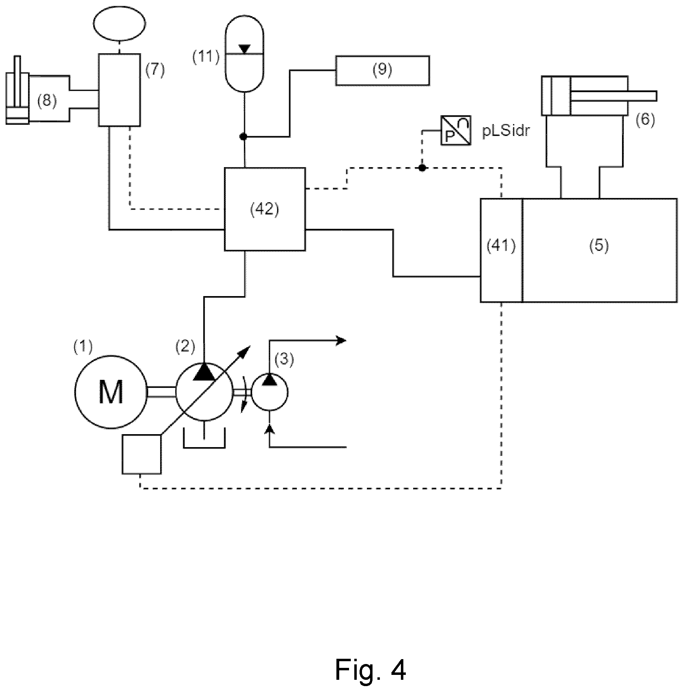

- Fig. 4:: ein Hydraulikschema mit einem eigenständigem Speicherladeventil für die Betriebsbremse.

Fig. 1 zeigt ein schematisches Diagramm zur Erläuterung des Zusammenhangs von Wicklungstemperatur (in Grad Celsius), Drehzahl (n) und Schwenkwinkel der Verstellpumpe. Der Schieberstrom oder auch die Ventilöffnung wird dabei durch I ausgedrückt, und verhält sich proportional zur Auslenkung des Schwenkwinkels der Verstel lpum pe.

Man erkennt, dass mit einem Ansteigen der Wicklungstemperatur über den vorgegebenen Temperatur-Schwellenwert von 120 °C der Strom I₀ abgesenkt wird. Vor einem Absenken ist der Schieberstrom dafür verantwortlich, dass der Schwenkwinkel der Verstellpumpe maximal ausgelenkt ist, um ein maximal mögliches Fördervolumen der Verstellpumpe zu erzeugen. Wie bereits erläutert führt dies bei entsprechender Last der Hydraulik-Pumpenanordnung dazu, dass durch den Elektromotor ein hohes Drehmoment zu erzeugen ist, was zu einem Anstieg der Wicklungstemperatur führen kann. Um einem weiteren Anstieg der Wicklungstemperatur entgegenzuwirken, wird bei einem Überschreiten des Temperatur-Schwellenwerts von 120 °C der Schieberstrom reduziert, was einem Verringern des Schwenkwinkels der Verstellpumpe gleichkommt. Um nun den geforderten Volumenstrom beizubehalten ist es erforderlich, die Drehzahl des Elektromotors und damit auch die Drehzahl der Verstellpumpe zu erhöhen, da ansonsten der Volumenstrom mit einem Verringern des Schwenkwinkels abnehmen würde. Man nimmt also die geringere Effizienz eines verringerten Schwenkwinkels der Verstellpumpe in Kauf, um ein weiteres Ansteigen der Wicklungstemperatur in dem Elektromotor zu verhindern.

In Fig. 2a) erkennt man die Variation des Antriebsmoments M der Pumpe, dass durch den Elektromotor erzeugt wird gegenüber der Drehzahl des Elektromotors bzw der Verstellpumpe. Darüber hinaus ist in gestrichelter Form auch noch die Wicklungstemperatur T dargestellt.

Im Normalfall wird der Elektromotor mit geringer Drehzahl betrieben, da der Schwenkwinkel der Verstellpumpe maximal ist, um die Effizienz hochzuhalten. Bei einer Belastung der Pumpe führt dies dazu, dass ein sehr hohes Drehmoment von dem Elektromotor bereitgestellt werden muss. Überschreitet nun die Wicklungstemperatur einen ersten Temperatur-Schwellenwert, wird der Schwenkwinkel der Verstellpumpe verringert, sodass der Motor bei einem gleich bleibenden Volumenstrom eine höhere Drehzahl aufbringen muss. Bei gleichbleibender auf die Pumpanordnung einwirkenden Kraft führt dies dazu, dass das vom Elektromotor bereitgestellte Drehmoment sinkt. Diese Schritte werden so oft wiederholt (zu den Zeitpunkten t₀, t₁, t₂, ..., tₙ) bis die Wicklungstemperatur den ersten Temperatur-Schwellenwert nicht mehr übersteigt. Dabei kann zwischen dem Ausüben der einzelnen Schritte jeweils eine gewisse Zeitspanne liegen, bspw. 60 Sekunden oder 5 Minuten um abzuwarten, ob der ausgeführte Schritt zu einer Verbesserung in der Wicklungstemperatur geführt hat.

Fig. 2b) zeigt ein Diagramm, welches das Fördervolumen Vg der Pumpe gegenüber der Drehzahl darstellt. Darüber hinaus ist in dem Diagramm in gestrichelter Linie noch der hydraulisch-mechanische Wirkungsgrad η der Verstellpumpe eingezeichnet.

Man erkennt, dass bei einem Anheben der Drehzahl der Verstellpumpe bzw. der Drehzahl des Elektromotors bei gleichbleibenden Volumenstrom das Fördervolumen der Pumpe linear absinkt, da der Schwenkwinkel aus seiner maximalen Auslenkung reduziert wird. Mit der Reduktion des Schwenkwinkels geht auch eine Reduktion des hydraulisch-mechanischen Wirkungsgrades η einher. Der Wirkungsgrad fällt signifikant ab je höher die Drehzahl der Verstellpumpe ist. Man erkennt hieran die Vorteile einer maximalen Auslenkung des Schwenkwinkels der Verstellpumpe, da hierbei der Wirkungsgrad der Pumpe am besten ist.

Figur 2c) zeigt ein Diagramm in welchem die Drehzahl der Verstellpumpe bzw. des Elektromotors gegenüber dem Schieberstrom zum Einstellen der Schwenkwinkels der Pumpe dargestellt ist. In gestrichelter Linie ist der konstante Volumenstrom Q eingezeichnet.

Man erkennt, dass mit einem ansteigen der Drehzahl bei einem konstanten Volumenstrom Q der Schieberstrom zum Einstellen des Schwenkwinkels der Verstellpumpe absinkt, da dieser ja direkt proportional zu einem Auslenken der Schwenkwinkels ist. Würde man mit einem Erhöhen der Drehzahl der Verstellpumpe den Schieberstrom bzw. den Schwenkwinkel nicht verändern, würde man einen höheren Volumenstrom Q erhalten, der vorliegend aber nicht gewünscht ist.

Fig. 3 zeigt ein Schaltbild einer erfindungsgemäßen Hydraulik-Pumpenanordnung.

Der Elektromotor 1 ist dabei über eine Antriebswelle mit der Verstellpumpe 2 verbunden. Optional kann dabei auch eine weitere Pumpe 3 vorgesehen sein, die bspw. eine Kühlölpumpe sein kann. Mit dem Bezugszeichen 4 ist ein Prioritätsventil bezeichnet, das Flüssigkeitsströmung in einer bevorzugten Reihenfolge verteilen kann, wenn mehrere Funktionen gleichzeitig betrieben werden. Dieses Ventil 4 sorgt dafür, dass bestimmten Hydraulikkreisen Priorität eingeräumt wird, wenn die Pumpe 2 nicht genügend Flüssigkeit liefern kann, um alle Kreise gleichzeitig zu betreiben.

Dem Prioritätsventil 4 vorgeschaltet ist dabei die Bremshydraulik 9. An das Prioritätsventil 4 angefügt ist die hydraulische Lenkeinheit 7 mit einem beispielhaft dargestellten Lenkzylinder 8 sowie ein Steuerblock 5, an dem verschiedene Arbeitsfunktionen einer mobilen Arbeitsmaschine angegliedert sind. Beispielhaft ist auch hier ein Arbeitszylinder 6 dargestellt.

Nach der Erfindung kann vorgesehen sein, dass die Ventilverschaltung 10 ein künstliches Lastdrucks-Signal pLS erzeugt, welches dazu beiträgt, trotz einer geringen Differenzdruckeinstellung den erforderlichen Betätigungsdruck für die Bremsanlage 9 zur Verfügung zu stellen. Bei der Ventilverschaltung 10 kann es sich bspw. um ein vorgespanntes Rückschlagventil handeln, wobei es sich bei dem Lastdrucks-Signal pLS um ein dynamisches Load-Sensing Signal handeln kann, welches vom Prioritätsventil 4 erzeugt wird. Durch diese Maßnahme können die Verluste beim manuellen Betrieb reduziert werden, indem man die Differenzdruckeinstellung am Pumpenregler auf ein Minimum reduziert.

Fig. 4 zeigt ein Hydraulikschema mit einem eigenständigem Speicherladeventil 42 für die Betriebsbremse.

Die Verschaltung weicht von der in Figur 3 ab, und man erkennt das Speicherladeventil 42 über welches der Hydraulikspeicher 11 geladen wird. Das Speicherladeventil 42 meldet bei Erreichen des Einschaltdrucks den Bedarf über eine Lastdruck-Signalleitung (LS-Signale) als zusätzlicher Verbraucher zur Arbeitshydraulik und zur Lenkung an einen Pumpenregler, was die Verstellpumpe 2 zum Ausschwenken in ihrem Schwenkwinkel veranlasst. Das Speicherladeventil 42 könnte auch als externes Prioritätsventil für mehrere Verbraucher angesehen werden.

Demnach ist es möglich, durch das Erfassen des Lastdrucks pLSidr auf den Bedarf des Speicherladeventils und reagieren zu können. Dies kann durch einen gemeinsamen Drucksensor für Speicherladefunktion, Lenkung und/oder Bremsanlage durchgeführt werden. Dabei wird dann die Drehzahl des Elektromotors entsprechend angehoben, sodass das Laden der Bremsspeicher bis zum Abschaltdruck in kurzer Zeit abgeschlossen werden kann.

### Bezugszeichenliste:

- 1: Elektromotor
- 2: Verstellpumpe
- 3: Kühlölpumpe
- 4: Prioritätsventil
- 5: Steuerblock Arbeitsfunktionen
- 6: Arbeitszylinder
- 7: hydraulische Lenkeinheit
- 8: Lenkzylinder
- 9: Bremshydraulik
- 10: Ventiltechnik zum Anheben des Load-Sensing-Meldesignals der Lenkung
- 11: Hydraulikspeicher
- 41: Steuerblockeingang ohne Prioritätskolben
- 42: externes Prioritätsventil für mehrere Verbraucher

## Patentansprüche

1. Hydraulik-Pumpenanordnung, umfassend:
eine Verstellpumpe, vorzugsweise einer Load-Sensing-Verstellpumpe, zum Ausgeben eines Volumenstroms eines Hydraulikfluids,
einen Elektromotor zum Antreiben der Verstellpumpe, insbesondere Schrägscheiben- oder Schwenkwinkelpumpe, über eine in ihrer Drehzahl variierbaren Antriebswelle, und
eine Steuereinheit, die mit der Verstellpumpe und dem Elektromotor verbunden ist und dazu ausgelegt ist, einen vorgegebenen Volumenstrom durch das Ansteuern der Verstellpumpe und des Elektromotors vorzusehen,
**dadurch gekennzeichnet, dass**
die Pumpenanordnung ferner einen mit der Steuereinheit verbundenen Temperatursensor aufweist, der eine Wicklungstemperatur des Elektromotors erfasst, wobei
solange die Wicklungstemperatur unterhalb eines Schwellenwerts liegt, die Steuereinheit dazu ausgelegt ist, den vorgegebenen Volumenstrom mittels einer maximalen Fördermenge der Verstellpumpe und der sich hieraus ergebenden Drehzahl des Elektromotors bereitzustellen, und
falls die Wicklungstemperatur den Schwellenwert erreicht oder übersteigt, die Steuereinheit dazu ausgelegt ist, den vorgegebenen Volumenstrom mittels einer gegenüber der maximalen Fördermenge verringerten Fördermenge der Verstellpumpe und der sich hieraus ergebenden erhöhten Drehzahl des Elektromotors bereitzustellen.

2. Pumpenanordnung nach dem vorhergehenden Anspruch 1, wobei zum Bereitstellen eines vorgegebenen, konstanten Volumenstroms für ein Anbaugerät im Dauerbetrieb, die Steuereinheit dazu ausgelegt ist, die Fördermenge der Verstellpumpe und die Drehzahl des Elektromotors in Abhängigkeit der gemessenen Wicklungstemperatur zu bestimmen, vorzugsweise derart, dass
a) ausgehend von einer maximalen Fördermenge der Verstellpumpe diese so lange abgesenkt wird, bis die Wicklungstemperatur sich stabilisiert und den Schwellenwert nicht mehr übersteigt, oder
b) ausgehend von einer minimalen Fördermenge der Verstellpumpe diese so lange angehoben wird, bis die Wicklungstemperatur den Schwellenwert übersteigt.

3. Pumpenanordnung nach einem der vorhergehenden Ansprüche 1 oder 2, wobei die Zusammenhänge von Wicklungstemperatur, Drehzahlnachführung des Elektromotors und einem Einstellen der Fördermenge der Verstellpumpe, vorzugsweise ein Bestromen eines Proportionalmagnetventils, als Kennlinien in der Steuereinheit abgelegt sind.

4. Hydraulik-Pumpenanordnung, vorzugsweise nach einem der vorhergehenden Ansprüche, umfassend:
eine Pumpe, insbesondere Verstellpumpe oder Konstantpumpe, zum Ausgeben eines Volumenstroms eines Hydraulikfluids,
einen Elektromotor zum Antreiben der Pumpe über eine in ihrer Drehzahl variierbaren Antriebswelle, und
eine Steuereinheit, die mit der Pumpe und dem Elektromotor verbunden ist und dazu ausgelegt ist, einen vorgegebenen Volumenstrom durch das Ansteuern des Elektromotors vorzusehen,
**dadurch gekennzeichnet, dass**
die Steuereinheit dazu ausgelegt ist, eine von einem Bediener mittels manueller Eingabe erzeugte Fördermengenvorgabe anhand der Fördermenge der Pumpe, insbesondere Fördermenge einer Konstantpumpe oder maximale Fördermenge einer Verstellpumpe, in eine Drehzahlvorgabe für den Elektromotor umzurechnen, vorzugsweise hieraus einen Vorgabewert zum Bestromen eines elektro-hydraulisch vorgesteuerten Proportionalventils auszugeben.

5. Pumpenanordnung nach einem der vorhergehenden Ansprüche, wobei die Vorgabe für eine Drehzahl und/oder eine Fördermenge der Verstellpumpe durch eine Auslenkung eines Joysticks oder einer Lenkung von einem Bediener vorgegeben sind und die Zusammenhänge des manuellen Betätigungswunsches, einer Drehzahlvorgabe und/oder der Fördermenge der Verstellpumpe, vorzugsweise einem Bestromen eines Proportionalmagnetventils formelmäßig und/oder als Kennlinien in der Steuereinheit abgelegt sind.

6. Pumpenanordnung nach einem der vorhergehenden Ansprüche, wobei die Steuereinheit ferner dazu ausgelegt ist, in einen Energiesparmodus einzutreten, der aktiv wird, wenn für eine vorbestimmte Zeit eine Hydraulikanforderung ausbleibt, und die Steuereinheit dazu ausgelegt ist, das Auslenken eines Joysticks für Arbeitsfunktionen und/oder das Auslenken einer Lenkung während des Energiesparmodus zu überwachen, um bei einem Fördermengenbedarf den Elektromotor wieder auf Drehzahl zu bringen.

7. Pumpenanordnung nach dem vorhergehenden Anspruch 6, ferner mit einer Überwachung einer manuellen Lenkungsbetätigung, die durch einen Joystick und/oder ein Lenkrad umgesetzt ist, und eine Veränderung über einen Winkel- oder Lagesensor erfasst, um einen Fördermengenbedarf zu erkennen und den Energiesparmodus zu verlassen.

8. Pumpenanordnung nach einem der vorhergehenden Ansprüche 6 oder 7, wobei eine Fahrtrichtungsvorwahl, ein Fahrpedal und/oder das Lösen einer Parkbremse durch die Steuereinheit überwacht wird, um einen Fördermengenbedarf zu erkennen und den Energiesparmodus zu verlassen.

9. Pumpenanordnung nach einem der vorhergehenden Ansprüche, wobei die Steuereinheit ferner dazu ausgelegt ist, einen Energiesparmodus zu unterdrücken, wenn eine oder mehrere Voraussetzungen erfüllt sind.

10. Pumpenanordnung nach einem der vorhergehenden Ansprüche 6-9, wobei die Steuereinheit ferner dazu ausgelegt ist, eine elektrisch betätigbare Parkbremse automatisch zu aktivieren, wobei die Parkbremse vorzugsweise als Negativbremse bzw. Federspeicherbremse ausgeführt ist, um beim Eintreten in den Energiesparmodus und dem Ausbleiben einer Bremsdruckversorgung für eine hydraulisch betätigbare Betriebsbremsanlage das Fahrzeug durch die Parkbremse zu fixieren.

11. Pumpenanordnung nach einem der vorhergehenden Ansprüche 6-10 ferner umfassend einen Drucksensor zum Überwachen eines Lastdrucks-Signals der Lenkung, um den Fördermengenbedarf einer Lenkanlage beim Betrieb des Motors bei Mindestdrehzahl zu erkennen, um hierauf durch die Steuereinheit die Motordrehzahl anzuheben.

12. Pumpenanordnung nach einem der vorhergehenden Ansprüche, ferner mit einer direkten oder indirekten Überwachung eine Schwenkwinkels der Verstellpumpe und einer Drehzahlnachführung des Elektromotors, die darauf abzielt, die Verstellpumpe stets mit einer möglichst großen Fördermenge zu betreiben, im Optimalfall mit ihrer maximalen Fördermenge.

13. Pumpenanordnung nach dem vorhergehenden Anspruch 12, wobei die Erfassung des Schwenkwinkels durch die Steuereinheit direkt mittels eines Winkelsensors oder indirekt ermittelt wird, wobei das indirekte Ermitteln des Schwenkwinkels durch die Steuereinheit erfolgt, indem anhand des Pumpenantriebsmoments, vorzugsweise als Information eines Frequenzumrichters, und des über einen Sensor erfassten Pumpendrucks der Schwenkwinkel unter Berücksichtigung typischer Wirkungsgrade rechnerisch ermittelt wird.

14. Hydraulik-Pumpenanordnung, vorzugsweise nach einem der vorhergehenden Ansprüche, umfassend:
eine Load-Sensing-Verstellpumpe zum Ausgeben eines Volumenstroms eines Hydraulikfluids,
einen Elektromotor zum Antreiben der Verstellpumpe, insbesondere Schrägscheiben- oder Schwenkwinkelpumpe, über eine in ihrer Drehzahl variierbaren Antriebswelle,
eine Steuereinheit, die mit der Verstellpumpe und dem Elektromotor verbunden ist und dazu ausgelegt ist, einen vorgegebenen Volumenstrom durch das Ansteuern der Verstellpumpe und des Elektromotors vorzusehen, und
einer hydraulisch betätigbaren Bremsanlage, deren Versorgungsdruck über dem Regeldifferenzdruck bzw. Stand-by-Druck der Verstellpumpe liegt,
**dadurch gekennzeichnet, dass**
der Verstellpumpe durch eine Ventilanordnung eine Lastdruckanforderungen simuliert wird, obwohl tatsächlich gar keine Lastdruckanforderungen existiert, sodass bei einer tatsächlichen Lastdruckanforderungen die simulierte Lastdruckanforderungen additiv hinzukommt.

15. Hydraulik-Pumpenanordnung, vorzugsweise nach einem der vorhergehenden Ansprüche, umfassend:
eine Load-Sensing-Verstellpumpe zum Ausgeben eines Volumenstroms eines Hydraulikfluids,
einen Elektromotor zum Antreiben der Verstellpumpe, insbesondere Schrägscheiben- oder Schwenkwinkelpumpe, über eine in ihrer Drehzahl variierbaren Antriebswelle,
eine Steuereinheit, die mit der Verstellpumpe und dem Elektromotor verbunden ist und dazu ausgelegt ist, einen vorgegebenen Volumenstrom durch das Ansteuern der Verstellpumpe und des Elektromotors vorzusehen, und
einer hydraulisch betätigbaren Bremsanlage, deren Versorgungsdruck über dem Regeldifferenzdruck bzw. Stand-by-Druck der Verstellpumpe liegt,
**dadurch gekennzeichnet, dass**
die Pumpenanordnung ferner ein Speicherladeventil aufweist, das einen Hydraulikspeicher für die Bremsanlage lädt, vorzugsweise wobei
ein Drucksensor für das Speicherladeventil vorgesehen ist, um bei Bedarf den Elektromotor mit dem Ziel anzusteuern, die Drehzahl der Pumpe zu erhöhen.

16. Pumpenanordnung nach einem der vorhergehenden Ansprüche 11 und/oder 15, wobei der Drucksensor zur Erfassung des Lastdrucks-Signals von einer Lenkanlage und/oder einem Speicherladevorgang dient und das jeweils lasthöhere Signal von der Steuereinheit verarbeitet wird.

17. Pumpenanordnung nach einem der vorhergehenden Ansprüche, wobei die Steuereinheit dazu ausgelegt ist, die Förderstromregelung der Verstellpumpe anhand eines hydraulischen Lastsignals des lasthöchsten Verbrauchers zu ermitteln, wobei diese Ermittlung mittels mechanischem Wege erfolgen kann jedoch auch über eine elektrisch-proportionale Verstellung des Fördervolumen mittels elektronischer Steuerung erfolgen kann.

18. Pumpenanordnung nach einem der vorhergehenden Ansprüche, wobei der Elektromotor über eine durch den Motor selbst angetriebene Zwangsbelüftung mittels mindestens einem Lüfterrad verfügt, sodass dessen Belüftung mit zunehmender Drehzahl zunimmt.

19. Hydraulikantrieb mit einer Pumpenanordnung nach einem der vorhergehenden Ansprüche zum Einsatz in einer Bau- und/oder Arbeitsmaschine, bspw. Radlader, Radbagger, Raupenbagger, Laderaupe, Schubraupe und/oder knickgelenkter Muldenkipper oder Bau- und/oder Arbeitsmaschine, bspw. Radlader, Radbagger, Raupenbagger, Laderaupe, Schubraupe und/oder knickgelenkter Muldenkipper mit einer Pumpenanordnung nach einem der vorhergehenden Ansprüche.
